# EUROPEAN PATENT SPECIFICATION

(11) **EP 4 608 625 B1**
(45) Date of publication and mention of the grant of the patent: **23.09.2026**
(21) Application number: 24739145.1
(22) Date of filing: 01.07.2024
(51) Int. Cl.: B29B 17/00, B29B 17/04, B29B 7/66, B29B 7/88, B29B 7/90, B29B 9/02, B29B 9/14, B29B 7/38, B29K 105/08, B29L 31/08, B29L 31/30

(54) **METHOD FOR OBTAINING SECONDARY RAW MATERIALS FROM COMPOSITE MATERIALS STRUCTURES**
VERFAHREN ZUR GEWINNUNG SEKUNDÄRER ROHSTOFFE AUS VERBUNDWERKSTOFFSTRUKTUREN
PROCÉDÉ D'OBTENTION DE MATIÈRES PREMIÈRES SECONDAIRES À PARTIR DE STRUCTURES DE MATÉRIAUX COMPOSITES

(30) Priority: 29.06.2023 EP 23382671
(43) Date of publication of application: 03.09.2025
(73) Proprietor: Enfinity Iberia S.L.U, 28046 Madrid (ES)
(72) Inventor: SANZ CANTOS, Manuel, 28046 Madrid (ES)
(74) Representative: Carlos Hernando, Borja
(86) International application number: PCT/EP2024/068462
(87) International publication number: WO 2025/003515

(56) References cited:
- WO-A1-2020/028914
- JP-A- 2009 197 107
- JP-A- H0 393 511
- US-A1- 2021 402 650
- PLAWECKA KINGA ET AL: "Recycling of Mechanically Ground Wind Turbine Blades as Filler in Geopolymer Composite", MATERIALS, vol. 14, no. 21, 30 October 2021 (2021-10-30), CH, pages 1 - 19, XP093203791, ISSN: 1996-1944, DOI: 10.3390/ma14216539
- ZHANG YIXUE ET AL: "Recycling and valorization of glass fibre thermoset composite waste by cold incorporation into a sustainable inorganic polymer matrix", COMPOSITES PART B, ELSEVIER, AMSTERDAM, NL, vol. 223, 6 July 2021 (2021-07-06), XP086766502, ISSN: 1359-8368, [retrieved on 20210706], DOI: 10.1016/J.COMPOSITESB.2021.109120

## Description

### OBJECT OF THE INVENTION

The present invention, secondary raw materials obtaining method from composite materials structures comprising at least fibre-resin composite material and core material, relates to a method based mainly on mechanical techniques that allow the structures of the composite material waste to be broken and to be able to reuse at least a first fibre-resin composite material in a formulation to obtain a secondary raw material. A first alternative is to reformulate the first composite material comprising only fibre-resin and foam material as core material with at least one thermoplastic compound to obtain a first secondary raw material that can be pelletised to obtain a pellet-shaped raw material. A second alternative is to reformulate the first composite material comprising fibre-resin and foam material as core material, with at least a georesin, to obtain a second secondary raw material that can be polymerized and moulded, or casted, to obtain a solid georesin compound.

The composite waste comprises at least a first fibre-resin composite material, in particular, reinforcement fibre embedded in a thermoset resin matrix. The composite material waste may also comprise a core material, for example a foam, preferably polyurethane or PVC, or a rigid material, preferably aluminium or balsa wood. The first composite material and the core material form a composite material structure. Said core material acts as a filler core in the waste. The fibres of the first composite material that act as reinforcement fibres in the product from which the waste is derived and contained in the thermoset resin matrix can be made of glass, carbon, Kevlar or other types of fibres of natural origin such as basalt, linen, hemp, among others. The core material that forms the core of the composite material structure can be, as mentioned, for example, PVC, polyurethane or balsa wood.

In that sense, the method of the present invention allows the recycling of-composite material structures waste, understood as waste with core material with a first composite material comprising fibres embedded in a thermoset resin matrix, or the recycling of waste with monolithic structures, understood as waste without a core material, in other words, with a first composite material comprising fibres embedded in a thermoset resin matrix.

The present invention belongs to the sector of recycling waste from thermoset composite materials, mainly waste derived from wind blades, ship hulls, food containers or aeronautical components among other waste from different industries, to obtain reusable secondary raw materials.

### BACKGROUND OF THE INVENTION

Composite materials are increasingly widely used by the industry. Sectors that traditionally used metals to manufacture their products, decide to replace them with composite materials since they bring many benefits such as weight reduction, better mechanical properties, better resistance to chemical agents, etc.

The global demand for composite materials is a growing demand. The total volume of the composite materials market in 2021 was 12 million metric tons and it is expected to reach a value of 15.5 million metric tons by the year 2026, value that can be exceeded due to the achievement of sustainable development objectives where certain sectors such as transport should increase the introduction of said materials in order to lighten vehicles and reduce fuel costs. In other sectors such as renewable energy, it is also possible that there will be significant increases in the consumption of composite materials due to the need for increasing renewable energy generation.

The increase in the demand for composite materials entails the problem of dealing with the management of a large amount of waste derived from said materials in a progressive manner. The main problem with these materials lies in the separation of their components where we usually find a monolithic material, with a reinforcement fibre embedded in a thermoset polymeric matrix, additionally combined with filling materials or foams, by way of cores, forming composite material structures, which are used to increase thickness.

In that sense, composite materials can be mainly classified into two categories based on their structure: monolithic type structure and composite material structure or sandwich type structure. The first one presents a greater homogeneity of its materials, however, sandwich structures use materials with different mechanical/chemical properties such as, for example, PVC foams, polyurethane, polystyrene, wood, metals or metal or aramid honeycombs (honeycomb structures).

In addition to the mechanical separation of the above composite material structures, there are other methods to carry out the separation of materials such as pyrolysis and solvolysis. The main problem with both techniques lies in the high energy consumption and the generation of other waste products. The pyrolysis of composite materials occurs in ovens at temperatures above 1000 °C by burning fossil fuels, in turn generating other waste such as pyrolytic gases. In the case of solvolysis, other liquid waste fractions are obtained that currently do not have defined applications.

Document JP2009197107 refers to a method for manufacturing pellets with a stabilized quality which are obtained by reusing a fibre-reinforced moulding containing cycloolefin cured resin. This document is silent about separating and recycling the foam from the product to recycle.

Another document describing a mechanical process for recycling products with fibres and resin is application WO2020028914A1. This document describes a process where all the material composing a blade are not separated, specially, the foam from the blade, and therefore all the products are mixed without controlling the percentages. Further, the pulverized resin in this prior art document is mixed with new resin and does not use thermoplastic resin.

US2021402650A1 patent application describes a method of manufacturing a part that includes the obtention of recycled fibres, mixing the same with a thermoplastic, and manufacturing a part with said material. This process is silent about the obtention of the fibres as it starts from these but not from a material with resin, fibres and foam.

Prior art patent application number JP H03 93511 A refers to a method for recovering a resin powder and a glass fibre to utilize the same as resources after grinding broken pieces of fibre reinforced plastic obtained by blasting and further grinding the same into sand-like state before separating the glass powder and the resin powder by a separator. This document is silent about the recycling of a composite material with foam and further refers to reusing pieces of 1 cm to 3 cm, considering a residue the powder around 1mm, which in this invention is, on the contrary, the size required for obtaining the pellets. Additionally, in this method there is no step for separating cores, but it refers to recycling carbon fibre monolithic compounds where a centrifugal separation of resin and fibre is made after being pulverized.

Traditionally, all composite material recycling processes have focussed on the elimination of the polymer matrices that coat the fibres. The process object of the present invention does not pursue the elimination of the polymeric matrix, although during the process same can be gradually degraded and disappear. Specifically, the method or process of the present invention consists of separating the components of the composite materials by means of mechanical processes prior to obtaining the pellets.

### DESCRIPTION OF THE INVENTION

The object of the invention is a method according to claim 1. The method allows obtaining pellets or a solid georesin compounds, as secondary raw material, as a result of recycling waste from composite materials. Said waste can be derived from a composite material with fibre and thermoset resin, both in monolithic structure and in composite material structure, usually a sandwich-type structure with a fibre-resin composite material like the previous one and a core material. The reinforcement fibre of the first material can be carbon fibre or fibreglass or fibre of natural origin, among others. The core material can be a foam, such as polyurethane or PVC, or rigid, such as balsa wood or aluminium, among others.

In particular, the secondary raw materials obtaining method from a composite materials structures waste with at least one first fibre-resin composite material and a core material, comprises the following steps:
a) At least one first ripping of the waste,
b) Densiometric separation of the composite materials structures waste into a first composite material with at least fibre-resin and into a second core material,
c) At least one shredding of the first composite material,
d) At least one first sieving of the shredded first composite material with at least fibre-resin, separating said material into at least two fractions of different sizes, a first fraction smaller than 1 mm and a first fraction larger than 1 mm,
e) Micronizing the first fraction larger than 1 mm to obtain a micronized composite material fraction smaller or equal to 1 mm,
f) Mixing the first fraction smaller than 1 mm with the micronized composite material, and
g) Reformulating the previous mix with at least one compound to obtain a secondary raw material.

Micronizing involves homogenizing the size of the fibres, the fraction that is larger than 1 mm, obtained after sieving the first composite material to a particular size. The smallest fraction, smaller than 1 mm, obtained after sieving is added to the result of the micronized fraction. Micronizing is the process that guarantees that the fraction larger than 1 mm reduces the same to a size smaller than 1 mm.

The first composite material has a resin ratio of between 40 % and 60% by weight and a fibre ratio of between 40 % and 60% by weight.

Optionally, immediately after the first ripping and before any other step, a second mechanical ripping of the waste occurs. If the waste material includes metal, this can be eliminated in a further step after the ripping of the composite materials structures waste.

Mechanical techniques are chosen due to their good relationship between the energy consumed and the amount of waste processed.

As the waste is a composite material structure, the first composite material presents a monolithic structure, with only fibre-resin compound without a core material, or on alternatively, the first composite material comprises fibre-resin incorporating a core material. After the first and/or second mechanical ripping, the torn waste is subjected to a densiometric separation so that, according to the different densities, the core material can be separated from the resin and fibre. This densiometric separation is carried out before shredding or grinding the waste. In this step, said densiometric separation can involve the whole separation of the fibre-resin compound and the core material, specially, a foam material, or the separation of a fraction of the core material, specially, foam.

In the densiometric separation, all, or part of the waste of the core is separated, leaving a first composite material with only fibre-resin or with fibre-resin and core material. The core material separated from the first composite material can be recycled by other means depending on the features of the core material, that as mentioned can be foam material (PVC or polyurethane) or rigid material (wood or metal). The recycling of the first composite material, with only fibre-resin composite or fibre-resin composite with core material, is continued being subjected to shredding.

Accordingly, the method begins with a first ripping, or primary ripping, to break the main structure of the waste, obtaining a mixed fraction of the first fibre-resin composite material and core materials adhered thereto, in the event, that the waste was a sandwich-type structure or composite material structure. Otherwise, if no core material is comprised in the waste, the same would only comprise a first composite material with fibre-resin composite. Subsequently, at least a second ripping, or secondary ripping, is performed, whereby the previous waste is separated into a smaller size fraction than the previous one.

Afterwards, if the waste comprises metal, a metal elimination step can be included.

As mentioned, if the smaller waste fraction comprises core material in addition to the fibre-resin composite material, the same passes through a separation table by densities, densiometric separation step, thus obtaining two independent fractions. A first fraction can comprise the first fibre-resin composite material with a part of the core material, or the first composite material with only fibre-resin composite, and another fraction with part or the whole core material. As mentioned, the core material fraction is discarded from subsequent steps.

According to the above, the first composite material is the one obtained after the densiometric separation, and the same can comprise only a fibre-resin compound with no core material, or a fibre-resin compound with core material, preferably foam.

In that sense, the first composite material, passes to the shredding or grinding step to subsequently passing to a sieving step or screening that discriminates based on the size of the first composite material. The sieving or screening separated the first composite material in a fraction larger than 1 mm and in a fraction smaller than 1 mm. To this step of shredding or grinding, the first composite material passes directly from the second ripping in the event, that the waste does not present a core material.

The fractions, larger and smaller than 1 mm of the first composite material obtained will be homogenised after the micronizing process of the fraction larger than 1 mm, so that finally the first composite material as a result of the mixing will be used in the reformulation step to subsequently obtain the secondary raw material. Said reformulation takes place between the first composite material with a size smaller than 1 mm and at least one compound. Said compound depends on the secondary raw material to be obtained.

In other words, after shredding or grinding, the aforementioned sieving of the first composite material is carried out and after the micronizing of the larger fraction, larger than 1 mm, derived from the sieving and after mixing with the smaller fraction, smaller than 1mm, after the sieving, the mix is subjected to a reformulation step by mixing the first composite material with at least one compound, preferably a thermoplastic polymer or a georesin, which is a silicate-based resin, thus obtaining, for example, a first second raw material or a second secondary raw material respectively. A georesin is a type of resin that is used for geotechnical applications, such as soil stabilization, ground improvement, and reinforcement of structures. It is a synthetic material that is made from a combination of polymers and hardeners, and it is designed to be strong, durable, and resistant to environmental factors such as moisture and temperature changes.

If the first composite material only comprises fibre and resin, without core material, its resin ratio is between 40 and 60% by weight and its fibre ratio is between 40% and 60% by weight, very similar to the ratio of the original waste prior to the beginning of the waste recycling method. If no core material is present in the first composite material, a thermoplastic compound can be added in a reformulation step to obtain the first second raw material. A thermoplastic polymer or composite should be understood as a plastic material which, at a given temperature, has the ability to be moulded and melted more than once, such as, for example, PVC or polyethylene, among others. Likewise, depending on the formulation of the thermoplastic polymer to be mixed with the first composite material, different secondary raw materials will be obtained.

This first secondary raw material is subjected to pelletising to obtain pellets. This pellet can be subsequently used in different industries depending on the characteristics of the fibre and resin of the composite material from the recycled component waste.

The first secondary raw material, or pellet obtained according to the previous method, comprises:
- Between 50% and 80% by weight of at least one thermoplastic polymer,
- At least between 15% and 45% by weight of a micronized fibre-resin composite material waste, and
- Between 0% and 5% by weight of at least one additive, such as UV protection additives, colorants, self-lubricating agents or compatibilizing agents.

Alternatively, if the first composite material comprises the fibre-resin compound and foam from the core material, its foam ratio is less than 50% of foam material in weight, a resin ratio between 20 and 60% by weight and a fibre ratio between 20% and 60% by weight. In a reformulation step, georesin is added to this first composite material to obtain a second secondary raw material. This second secondary raw material is subjected to polymerisation to obtain, after casting or molding, a solid georesin compound. This solid georesin compound can be subsequently used in different industries depending on the characteristics of the fibre, resin, foam and georesin as during the casting or molding different shapes can result, such as bricks, decorative panels or pots, or other products with high mechanical resistance to compression.

The solid georesin compound or second secondary raw material, comprises:
- Between 40% and 80% by weight of at least one georesin compound,
- At least between 20% and 60% by weight of a first composite material with fibre-resin and foam material, and
- Between 0% and 5% by weight of at least one additive, such as, reinforcing fibres or polyurethane based polymers.

The above methods are developed in a system comprising:
- At least one ripper or shredder, preferably two rippers or shredders, one after the other to reduce the size of the waste,
- A densiometric table, for separating the waste into a first composite material with or without core material, and core material, preferably foam,

- A grind or shredder and a screening machine or sieve after the same, for reducing the size of the fibres of the first composite material to a first fraction of fibres smaller than 1 mm and a second fraction of fibres larger than 1 mm.
- A micronizer to reduce the fibres larger than 1 mm to fibres smaller or equal to 1 mm.
- A device for mixing the first fraction of fibres with the micronized fibres.
- A device for reformulating the fibres smaller or equal to 1 mm with a compound, preferably a thermoplastic compound or a georesin compound to obtain a secondary raw material.
- A pelletizer to obtain pellets after the reformulation of a first material with only fibre-resin with the thermoplastic compound, or alternatively, a polymerization device for obtaining a solid georesin compound after the reformulation of a first material with fibre-resin and foam with a georesin compound.

The system can further comprise a station, preferably a metal separator using Foucalt's currents, for elimination metals, immediately after the first, or second if available, ripping or shredding, to separate all the metals of the core, from example from a honeycomb core, from the waste material.

### DESCRIPTION OF THE DRAWINGS

To complete the description of the present invention and facilitate the understanding of the features therein, Figure number 1 is included showing a detailed block diagram of the method object of the invention.

### PREFERRED EMBODIMENT OF THE INVENTION

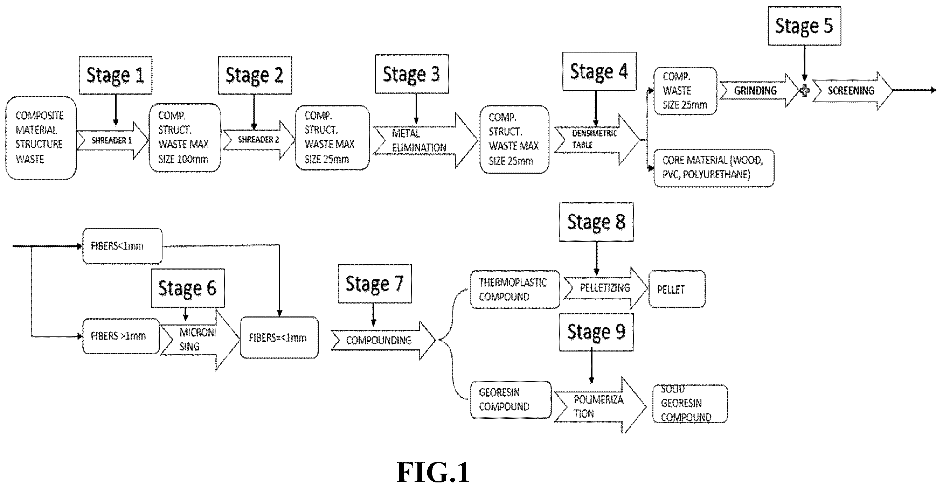

Next, a description of several methods object of the invention for recycling composite materials waste structures is made with reference to Figure 1.

Step 1 of the process consists of a primary ripping, preferably with a double-spindle ripper that allows breaking the main structure of the waste to be processed. The resulting fraction may have attached core, preferably foam particles if the waste comprises a sandwich structure or a composite structure made up of a monolithic fibre and resin structure together with a core, foam or rigid. If the waste only has a monolithic structure, same will not have materials associated with the foam or core. The resulting fraction from this first ripping is a waste with nominal maximum widths between 80 mm and 25 mm.

Step 2 of the process consists of a second ripping, or secondary ripping, with a single spindle ripper that facilitates the separation of the core material from the fibre-resin composite material, if the waste comprises said core. The resulting fraction from this process is a heterogeneous waste with a maximum size between 50 mm and 15 mm.

If the waste material comprises metals, the same are eliminated in Step 3 with, preferably, a metal separator using Foucalt's current.

Step 4 of the process consists of a densiometric separation on a densiometric table. This step is only carried out if the waste has a sandwich-type structure, in other words, with core, preferably foam, and the fibre-resin composite material. If the waste material is monolithic, that is to say, with only fibre-resin composite material, the densiometric separation is not necessary. Anyway, if the waste material comprises fibre-resin composite material and core material, such a foam, the densiometric separation can separate the waste material to obtain a first composite material with only fibre-resin and no core material, preferably foam, eliminating all the core material from the resultant first composite material, or it can separate the waste material to obtain a first composite material with fibre-resin and core material, preferably foam, and a another part of core material.

Therefore, the resulting fractions from this step can be a fraction of the first composite material with fibre-resin and without core material and a fraction with core material, or a fraction of the first composite material with fibre-resin and with core material and another fraction with core material. The fraction of core material is stored for subsequent recycling.

Step 5 of the process consists of a shredding or grinding of the fraction of the first composite material, followed by sieving or sieve filtering, or screening, preferably a vibrating one with a screening machine. Once the first composite material is shredded or grinded and passes through the sieve or screening machine, a fraction of the first composite material with fibres smaller than 1 mm and another discriminated fraction with fibres larger than 1 mm is obtained. The fraction of first composite material smaller than 1 mm is considered valid and is separated for a subsequent step. The fraction larger than 1 mm passes to the next step of micronizing in a micronizer.

Step 6 of the process consists of a micronizing of the fraction larger than 1 mm, preferably by means of spray equipment. The resulting fraction from this micronizing process is a homogenised fibre below 1 mm. The fraction of composite material smaller than 1 mm obtained after the previous sieving, in other words, those obtained after step 5, is added to this resulting fraction that has been micronized.

Step 7 consists of a chemical reformulation or compounding of the first composite material into fibres smaller than 1 mm by mixing the same with another compound. Said compound can be, for example, a thermoplastic polymer or composite or a georesin compound. After this reformulation or compounding a secondary raw material is obtained.

Depending on the compound for reformulating or compounding the first composite material, with or without foam as core material, can be subjected to a different step.

If the first composite material only comprises fibre resin, without foam as core material, the same is reformulated with a thermoplastic compound in step 8, where the chemical composite formulated in step 7 is pelletised, thus obtaining a thermoplastic pellet that can be used in common transformation processes such as injection, extrusion, pressing, 3d printing, etc., for different applications. The resulting pellet comprises:
- Between 50% and 80% by weight of at least one thermoplastic polymer,
- At least between 15% and 45% by weight of a micronized fibre-resin composite material waste, and
- Between 0% and 5% by weight of at least one additive.

On the other hand, if the first composite material comprises foam as core material in addition to the fibre-resin, the same is reformulated with a georesin compound in step 9, where the chemical composite formulated in step 7 is polymerized for obtaining a compound to be casted or molded to obtain a solid georesin compound with the desired shape. This solid georesin compound might have the shape of a brick, a panel or a pot, among others. The resulting solid georesin compound comprises:
- Between 40% and 80% by weight of at least one georesin,
- At least between 20% and 60% by weight of a first composite material with fibre-resin and foam material, and
- Between 0% and 5% by weight of at least one additive.

## Claims

1. Secondary raw materials obtaining method from composite materials structures waste with at least fibre-resin composite material and core material, comprising at least the following steps:
a) At least one first ripping of the composite materials structures waste,
b) Densiometric separation of the composite materials structures waste into a first composite material with at least fibre-resin and into a second core material,
c) At least one shredding of the first composite material,
d) At least one first sieving of the shredded first composite material with at least fibre-resin, separating said material into at least two fractions of different sizes, a first fraction smaller than 1 mm and a first fraction larger than 1 mm,
e) Micronizing the first fraction larger than 1 mm to obtain a micronized composite material fraction smaller or equal to 1 mm,
f) Mixing the first fraction smaller than 1 mm with the micronized composite material, and
g) Reformulating the previous mix with at least one compound to obtain a secondary raw material.

2. The method according to claim 1, **characterised in that** immediately after the first ripping and before any other step, a second ripping is produced.

3. The method, according to claim 1, **characterized in that** it comprises a metal elimination stage before the densiometric separation.

4. The method according to claim 1, **characterised in that** the core is a foam material, such as polyurethane or PVC, or a rigid material such as aluminium or balsa wood.

5. The method, according to any of previous claims, **characterized in that** the first composite material comprises no core material and after the reformulation with a thermoplastic polymer as compound, a first secondary raw material is obtained and afterwards pelletized for obtaining pellets.

6. The method, according to claim 5, **characterised in that** the first composite material has a resin ratio between 40 and 60% by weight and a fibre ratio between 40% and 60% by weight.

7. The method, according to any of previous claims 1 to 4, **characterized in that** the first composite material comprises a foam as core material and after the reformulation with a georesin as compound, a second secondary raw material is obtained and afterwards polymerized and moulded, or casted, for obtaining a solid georesin compound.

8. The method, according to claim 7, **characterized in that** the first composite material comprises less than 50% of foam material in weight, a resin ratio between 20 and 60% by weight and a fibre ratio between 20% and 60% by weight.

## Patentansprüche

1. Verfahren zur Gewinnung sekundärer Rohstoffe aus Abfällen von Verbundwerkstoffstrukturen mit mindestens Faser-Harz-Verbundwerkstoff und Kernwerkstoff, umfassend mindestens die folgenden Schritte:
a) Mindestens ein erstes Aufreißen der Abfälle von Verbundwerkstoffstrukturen,
b) Densitometrische Trennung der Abfälle von Verbundwerkstoffstrukturen in einen ersten Verbundwerkstoff mit mindestens Faser-Harz und in einen zweiten Kernwerkstoff,
c) Mindestens ein Zerkleinern des ersten Verbundwerkstoffs,
d) Mindestens ein erstes Sieben des zerkleinerten ersten Verbundwerkstoffs mit mindestens Faser-Harz, wobei der Werkstoff in mindestens zwei Fraktionen unterschiedlicher Größe getrennt wird, eine erste Fraktion kleiner als 1 mm und eine erste Fraktion größer als 1 mm,
e) Mikronisieren der ersten Fraktion größer als 1 mm, um eine mikronisierte Verbundwerkstofffraktion zu erhalten, die kleiner oder gleich 1 mm ist,
f) Mischen der ersten Fraktion kleiner als 1 mm mit dem mikronisierten Verbundwerkstoff, und
g) Neuformulieren der vorherigen Mischung mit mindestens einer Verbindung, um einen sekundären Rohstoff zu erhalten.

2. Verfahren nach Anspruch 1, **dadurch gekennzeichnet, dass** unmittelbar nach dem ersten Aufreißen und vor jedem weiteren Schritt ein zweites Aufreißen erfolgt.

3. Verfahren nach Anspruch 1, **dadurch gekennzeichnet, dass** es eine Metallentfernungsstufe vor der densitometrischen Trennung umfasst.

4. Verfahren nach Anspruch 1, **dadurch gekennzeichnet, dass** der Kern ein Schaumstoffwerkstoff wie Polyurethan oder PVC oder ein starrer Werkstoff wie Aluminium oder Balsaholz ist.

5. Verfahren nach einem der vorhergehenden Ansprüche, **dadurch gekennzeichnet, dass** der erste Verbundwerkstoff kein Kernwerkstoff enthält und nach der Neuformulierung mit einem thermoplastischen Polymer als Verbindung ein erster sekundärer Rohstoff erhalten und anschließend pelletiert wird, um Pellets zu erhalten.

6. Verfahren nach Anspruch 5, **dadurch gekennzeichnet, dass** der erste Verbundwerkstoff einen Harzanteil zwischen 40 und 60 Gew.-% und einen Faseranteil zwischen 40 und 60 Gew.-% aufweist.

7. Verfahren nach einem der vorhergehenden Ansprüche 1 bis 4, **dadurch gekennzeichnet, dass** der erste Verbundwerkstoff einen Schaumstoff als Kernwerkstoff umfasst und nach der Neuformulierung mit einem Geoharz als Verbindung ein zweiter sekundärer Rohstoff gewonnen und anschließend polymerisiert und geformt oder gegossen wird, um eine feste Geoharzverbindung zu erhalten.

8. Verfahren nach Anspruch 7, **dadurch gekennzeichnet, dass** der erste Verbundwerkstoff weniger als 50 Gew.-% Schaumstoffwerkstoff, einen Harzanteil zwischen 20 und 60 Gew.-% und einen Faseranteil zwischen 20 und 60 Gew.-% umfasst.

## Revendications

1. Procédé d'obtention de matières premières secondaires à partir de déchets de structures en matériaux composites comportant au moins un matériau composite fibre-résine et un matériau d'âme, comprenant au moins les étapes suivantes :
a) au moins un premier déchirement des déchets de structures en matériaux composites,
b) séparation densimétrique des déchets de structures en matériaux composites en un premier matériau composite comportant au moins de la fibre-résine et en un second matériau d'âme,
c) au moins un broyage du premier matériau composite,
d) au moins un premier tamisage du premier matériau composite broyé comportant au moins de la fibre-résine, séparant ledit matériau en au moins deux fractions de tailles différentes, une première fraction inférieure à 1 mm et une première fraction supérieure à 1 mm,
e) micronisation de la première fraction supérieure à 1 mm afin d'obtenir une fraction de matériau composite micronisé inférieure ou égale à 1 mm,
f) mélange de la première fraction inférieure à 1 mm avec le matériau composite micronisé, et
g) reformulation du mélange précédent avec au moins un composé afin d'obtenir une matière première secondaire.

2. Procédé selon la revendication 1, **caractérisé en ce qu'**immédiatement après le premier déchirement et avant toute autre étape, un second déchirement est effectué.

3. Procédé selon la revendication 1, **caractérisé en ce qu'**il comprend une étape d'élimination des métaux avant la séparation densimétrique.

4. Procédé selon la revendication 1, **caractérisé en ce que** l'âme est un matériau en mousse, tel que du polyuréthane ou du PVC, ou un matériau rigide tel que de l'aluminium ou du bois de balsa.

5. Procédé selon l'une quelconque des revendications précédentes, **caractérisé en ce que** le premier matériau composite ne comprend aucun matériau d'âme et qu'après la reformulation avec un polymère thermoplastique en tant que composé, une première matière première secondaire est obtenue puis ensuite granulée afin d'obtenir des granulés.

6. Procédé selon la revendication 5, **caractérisé en ce que** le premier matériau composite présente un taux de résine compris entre 40 et 60 % en poids et un taux de fibres compris entre 40 % et 60 % en poids.

7. Procédé selon l'une quelconque des revendications 1 à 4, **caractérisé en ce que** le premier matériau composite comprend une mousse en tant que matériau d'âme et qu'après la reformulation avec une géorésine en tant que composé, une seconde matière première secondaire est obtenue puis ensuite polymérisée et moulée, ou coulée, afin d'obtenir un composé solide de géorésine.

8. Procédé selon la revendication 7, **caractérisé en ce que** le premier matériau composite comprend moins de 50 % en poids de matériau en mousse, un taux de résine compris entre 20 % et 60 % en poids et un taux de fibres compris entre 20 % et 60 % en poids.
